Europäisches Patentamt

(19) European Patent Office

Office européen des brevets

(11) Publication number: **0 054 400**
**B1**

(12) **EUROPEAN PATENT SPECIFICATION**

(45) Date of publication of patent specification: **31.10.84**

(21) Application number: **81305792.4**

(22) Date of filing: **08.12.81**

(51) Int. Cl.³: **F 02 C 7/228,** F 02 C 7/22

(54) **Gas turbine fuel supply system.**

(30) Priority: **08.12.80 US 214321**

(43) Date of publication of application:
**23.06.82 Bulletin 82/25**

(45) Publication of the grant of the patent:
**31.10.84 Bulletin 84/44**

(84) Designated Contracting States:
**CH DE FR GB LI**

(56) References cited:
**GB-A- 577 062**
**GB-A-2 041 085**
**US-A-2 870 826**
**US-A-2 881 827**
**US-A-3 774 851**

(73) Proprietor: **SOLAR TURBINES INCORPORATED**
**2200 Pacific Highway P.O. Box 80966**
**San Diego California 92138 (US)**

(72) Inventor: **Faulkner, Robie Linwood**
**6897 Wallsey Drive**
**San Diego California 92138 (US)**
Inventor: **Ogborne, Graham Edward**
**3919 Gayle Street**
**San Diego California 92138 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

# Description

The present invention relates to systems for supplying fuel to the combustors of gas turbine engines.

In one typical type of engine with which our invention is concerned, air is compressed, typically by a multi-stage, axial flow compressor, and discharged through a diffuser into an annular combustor where the air is heated by fuel burned in the combustor. The heated air and the combustion products generated in the combustor are expanded first through a gas producer turbine, which drives the compressor, and then through a power turbine. The power turbine can be coupled to a generator, gas pipeline booster compressor, mechanical drive, or other driven unit.

The foregoing, and other, gas turbine engines with which our invention can be used to advantage are intended at least optionally, to be operated on liquid fuels; and it is operation on that type of fuel with which we are concerned.

In particular, in the type of engine with which we are concerned, the fuel is distributed from a circular or ring-shaped manifold to a similarly configured array of fuel injectors spaced equidistantly around the other case of the engine's annular combustor at the upstream end of the latter. Air, typically taken from the combustor discharge is also supplied to the injectors. This air atomizes the liquid fuel before the fuel is introduced into the combustion chamber so that it will burn efficiently.

Efficient combustion is important for economic reasons and because it minimizes the generation of noxious combustion products. This objective requires that the fuel be uniformly distributed to all of the fuel injectors associated with a combustor. That can be a difficult problem to solve, particularly during light off, because the fuel manifold must be filled and because conditions are otherwise highly transient and do not favour this goal.

Heretofore, the problem of uniformly distributing fuel to the several fuel injectors of an annular gas turbine engine combustor has been solved by employing a complex central fuel distribution valve or by associating a fuel metering valve with each injector as shown in US—A—2,606,066 and US—A—3,774,851. Both of these arrangements have the drawback of being extremely expensive.

GB—A—2,041,085 discloses a gas turbine fuel supply system (hereinafter referred to as of the kind described) comprising arcuately shaped fuel manifolds having, together, an essentially circular configuration; a circular array of substantially equiangularly spaced fuel injectors spaced concentrically within the circle formed by the manifolds; fuel lines connecting those fuel injectors girdled by each of the manifolds to that manifold, means for supplying fuel; a fuel supply line connected between the fuel supplying means and at least one of the manifolds substantially mid way between the ends of the latter; and means in the fuel supply line for creating a pressure drop that is effective, in use, to cause the fuel to be distributed at substantially equal rates through the manifolds. However the particular system disclosed in GB—A—2,041,085 involves multiple manifolds, one for every three injectors, and each with its own distributor valve. We have now appreciated that this is unnecessarily complicated.

In accordance with the invention, a system of the kind described is characterised in that the essentially circular configuration is provided by an upper and lower manifold; that the fuel supplying means is connected to the upper manifold at the opposite ends thereof; and that the fuel supply line is connected between the fuel supplying means and the lower manifold substantially mid way between the ends of the latter.

Preferably, the means for creating the pressure drop is a check valve oriented to allow fuel to flow from the fuel supplying means through the fuel supply line to the lower manifold.

We have thus discovered that the high cost of the prior art liquid fuel distribution system can be avoided by the novel distribution system which employs a split ring manifold and a simple inexpensive check valve which, in conjunction with the split manifold, ensures sufficiently uniform flow to the injectors served by the manifold to be acceptable. The cost of this system is only a small fraction of those heretofore employed and described above.

The system may also include means for draining fuel from the lower manifold upon shutdown of an engine with which the fuel supply system is, in use, associated, the draining means comprising a fuel return line connected between the fuel supplying means and the lower manifold adjacent to the fuel supply line and a check valve in the fuel return line oriented to allow fuel to flow from the lower manifold into the supplying means when the pressure in the latter falls below the pressure in the lower manifold. A drainage system with a similar function, although with a more complex fuel valve construction, is disclosed in US—A—2,881,827. However the simple provision of a drainage check valve in a fuel return line positioned alongside the fuel supply line and connected between the fuel supplying means and the lower manifold is found to be of particular merit in the new fuel supply system.

. An example of a gas turbine engine combustor fitted with a system constructed in accordance with the invention is illustrated in the accompanying drawings, in which:—

Figure 1 shows, schematically, the combustor and system for supplying liquid fuel to the combustor and,

Figure 2 is a fragmentary section through certain components of the fuel supply system, taken substantially on the line 2—2 in Figure 1.

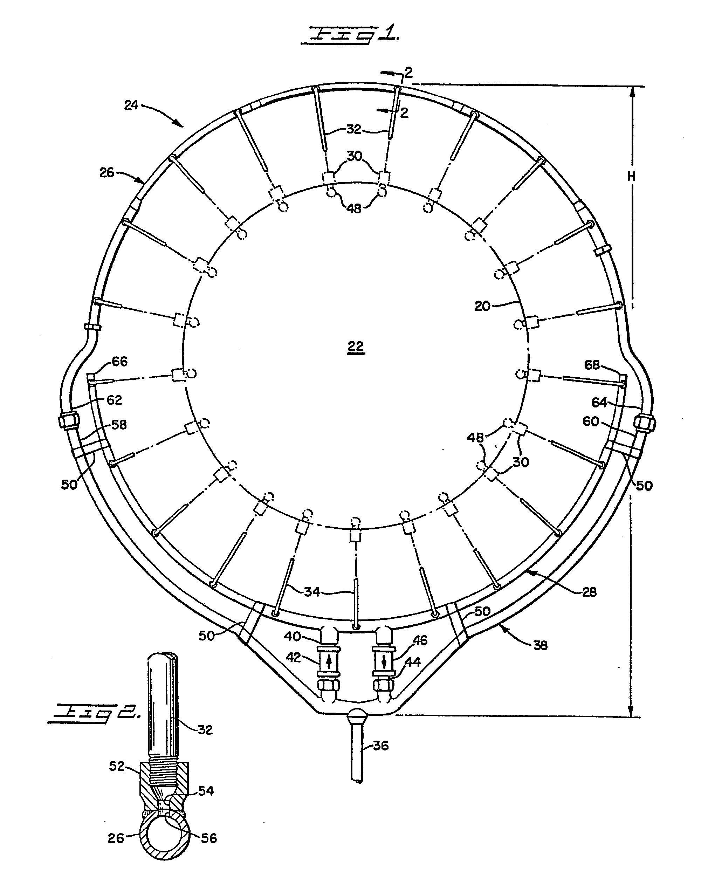

In the drawings, the phantom line identified by reference character 20 in Figure 1 represents, schematically, the outer casing of a gas turbine engine combustor 22 such as that disclosed in US—A—4,167,097.

Liquid fuel is supplied to the combustor 22 in atomized form by a liquid fuel supply system 24.

The illustrated system is intended to be employed in a vertical orientation. Its main components include an upper manifold 26, a lower manifold 28, and a circular array of fuel injectors 30 supplied with fuel from the upper manifold 26 through fuel lines 32 and from the lower manifold 28 through fuel lines 34. Fuel is supplied to the upper manifold 26 through fuel lines 36 and 38 and to the lower manifold 28 through a fuel line 40 extending between that manifold and fuel supply line 38. A check valve 42 is incorporated in fuel line 40.

The system also includes a fuel return line 44 between the lower manifold 28 and a fuel line 38 in which a second check valve 46 is incorporated.

The illustrated fuel injectors 30 are of the air blast type. Fuel supplied to the injectors is atomized by air discharged from the compressor (not shown) of the gas turbine engine with which they are employed, and the fuel is then discharged into the combustor 22.

During light-off or start-up, the rate of flow of the liquid fuel to the injectors is low; the pressure drop across the fuel injectors is therefore correspondingly low; and the hydraulic head in the fuel supply system consequently keeps the fuel from reaching the upper fuel injectors in the array thereof until long after it has reached the injectors at lower elevations in that array.

The effect of this uneven distribution of fuel during light-off conditions is inefficient combustion and a substantial increase in the generation of noxious emissions.

The system 24 ensures that the fuel is more equally distributed to the upper and lower injection, thereby promoting combustion efficiency and minimizing the generation of noxious emissions.

As shown in Figure 1, the combustor casing 20 has a circular section; and the fuel injectors 30 are spaced around this casing in a circular array at essentially equal intervals with the discharge ports 48 of the injectors located inside the casing 20 to discharge atomized fuel into the combustor 22.

The upper and lower manifolds 26 and 28 together make up what we term a split manifold. Both are of semicircular configuration; and, together, they concentrically encircle the casing 20 of combustor 22. The two manifolds are fastened together in this relationship by brackets 50 which are not of critical construction.

The fuel lines 32 and 34 through which the liquid fuel flows from the upper and lower manifolds to the injectors 30 extend radially inward from the manifolds to the injectors at essentially equiangular intervals therearound. At their outer ends, they are connected to the manifolds by tubular fittings 52 best shown in Figure 2. Apertures 54 in the fittings and 56 in the manifolds with which they are associated provide communication between the latter and fuel lines 32 and 34.

The line 38 through which the fuel is supplied to the upper manifold 26 is, like the latter, of generally arcuate configuration. It is spaced concentrically from, and surrounds, the lower manifold 28; and its upper ends 58 and 60 are connected, on opposite sides of the fuel supply system, to the lower ends 62 and 64 of the upper manifold 26.

The line 36 by which fuel line 38 is supplied communicates with the latter at the bottom thereof and mid way between its upper ends 58 and 60.

It will be appreciated from Figure 1, that particularly under the low fuel pressure conditions existing at light-off, the hydraulic head H across the fuel supply system would result in the fuel reaching those injectors nearer the bottom of combustor 22 much more rapidly than the uppermost injectors if a simple ring type manifold were employed to supply fuel to the injectors. This inequality of flow distribution is significantly reduced in the system 24 by the flow equalizing arrangement composed of the fuel line 40 and the check valve 42.

Specifically, the fuel line 40 is connected between the line 38 and the lower manifold 28 approximately mid way between the two ends 66 and 68 of the lower manifold, the liquid fuel thereby flowing from the line 38 through the line 40 into, and in opposite directions through, the lower manifold.

The check valve 42, which is oriented to allow fuel to flow in the direction just described, is set to open when the pressure in the fuel line 38 reaches one-half of the hydraulic head H across the system. That reduces the fuel pressure at the bottom of lower manifold 28; and, consequently, the pressure vertically across that manifold (check valve outlet pressure—H/2) more nearly equals the pressure across the upper manifold 36 and its fuel supply line 38 (line pressure in 38—H) than would otherwise be the case.

Therefore, the rates of flow of the fuel through the two manifolds and the time required to fill them are more equal. Thus, with a simple, inexpensive check valve arrangement, we accomplish essentially the same result as do the more expensive central, and injector valve-associated fuel distribution systems disclosed in the above-cited Patent Specifications.

Also, by thus reducing the effect of the hydraulic head across the system 24, the arrangement just described results in a more uniform flow of fuel to the injectors at different elevations during the operation of the engine with which the fuel supply system is associated. This, too, results in more efficient combustion and lower emission levels.

The fuel return line 44 is provided so that fuel can drain from lower manifold 28 back into the fuel lines 38 and 36 when the engine with which the fuel supply system is associated is shut down. The check valve 46 in the line 44 is oriented for fuel flow in that direction. As long as the engine is running and fuel is being supplied to it through the fuel lines 36 and 38, the pressure in the line 38 is higher than that in the lower manifold 28 by virtue of the pressure drop across the check valve 42; and the valve 46 accordingly remains closed. When the engine is shut down, however, the pressure in the lines 36 and 38 drops; and the hydraulic head on the fuel in the lower manifold consequently causes the check valve to open and allow the fuel to drain out of the manifold through the return line 44.

**Claims**

1. A gas turbine engine fuel supply system comprising arcuately shaped fuel manifolds (26,28) having, together, an essentially circular configuration; a circular array of substantially equiangularly spaced fuel injectors (30) spaced concentrically within the circle formed by the manifolds; fuel lines (32,34) connecting those fuel injectors girdled by each of the manifolds to that manifold; means (36,38) for supplying fuel; a fuel supply line (40) connected between the fuel supplying means (36,38) and at least one of the manifolds (28) substantially mid way between the ends of the latter; and means (42) in the fuel supply line (40) for creating a pressure drop that is effective, in use, to cause the fuel to be distributed at substantially equal rates through the manifolds, characterized in that the essentially circular configuration is provided by an upper and a lower manifold (26,28); that the fuel supplying means (36,38) is connected to the upper manifold (26) at the opposite ends thereof; and that the fuel supply line (40) is connected between the fuel supplying means (36,38) and the lower manifold (28) substantially mid way between the ends of the latter.

2. A system according to claim 1, wherein the means for creating the pressure drop is a check valve (42) oriented to allow fuel to flow from the fuel supplying means (26,38) through the fuel supply line (40) to the lower manifold (28).

3. A system according to claim 1 or claim 2, which includes means for draining fuel from the lower manifold upon shutdown of an engine with which the fuel supply system, is in use, associated, the draining means comprising a fuel return line (44) connected between the fuel supplying means (36,38) and the lower manifold (28) adjacent to the fuel supply line (40) and a check valve (46) in the fuel return line oriented to allow fuel to flow from the lower manifold into the fuel supplying means when the pressure in the latter falls below the pressure in the lower manifold.

4. A system according to any one of the preceding claims, wherein the fuel supplying means comprises a first, substantially semicircular fuel line means (38) surrounding the lower manifold (28) and connected at its opposite ends to the ends of the upper manifold (26), and a second fuel line (36) communicating with the first fuel line (38) substantially mid way between the ends of the latter.

5. A system according to any one of the preceding claims, wherein the fuel injectors (30) are of the air blast type.

6. A gas turbine engine equipped with a fuel supply system according to any one of the preceding claims.

**Patentansprüche**

1. Ein Brennstoffzufuhrsystem für eine Gasturbine, welches folgendes aufweist; Bogenförmige Brennstoffsammelleitungen (26,28), die zusammen eine im wesentlichen kreisförmige Konfiguration besitzen, eine kreisförmige Anordnung von im wesentlichen mit gleichem Winkelabstand angeordneten Brennstoffinjektoren (30), die konzentrisch mit Abstand innerhalb des durch die Sammelleitungen gebildeten Kreises angeordnet sind, Brennstoffleitungen (32,34) zur Verbindung dieser durch jede der Sammelleitungen umfaßten Brennstoffinjektoren mit dieser Sammelleitung, Mittel (36,38) zur Brennstoffzufuhr, eine Brennstoffzufuhrleitung (40) verbunden zwischen den Brennstoffzufuhrmitteln (36,38) und mindestens einer der Sammelleitung (28), im wesentlichen mittig zwischen den Enden der letzteren, und Mittel (42) in der Brennstoffzufuhrleitung (40), zur Erzeugung eines Druckabfalls, der bei Verwendung effektiv ist um zu bewirken, daß der Brennstoff mit im wesentlichen gleichen Raten durch die Sammelleitungen verteilt wird, dadurch gekennzeichnet, daß die im wesentlichen kreisförmige Form durch eine obere und eine untere Sammelleitung (26,28) vorgesehen wird, daß die Brennstoffzufuhrmittel (36,38) mit der oberen Sammelleitung (26) an deren entgegengesetzten Enden verbunden ist, und daß die Brennstoffzufuhrleitung (40) zwischen den Brennstoffzufuhrmitteln (36,38) und der unteren Sammelleitung (28) liegt, und zwar im wesentlichen mittig zwischen den Enden der letzteren.

2. System nach Anspruch 1, wobei die Mittel zur Erzeugung des Druckabfalls ein Rückschlagventil (42) sind, und zwar derart orientiert, daß Brennstoff von den Brennstoffzufuhrmitteln (26,38) durch die Brennstoffzufuhrleitung (40) zur unteren Sammelleitung (28) fließen kann.

3. System nach Anspruch 1 oder Anspruch 2, wobei Mittel vorgesehen sind zum Ablaufen von Brennstoff von der unteren Sammelleitung beim Abschalten einer Maschine, mit der das Brennstoffzufuhrsystem im Gebrauch verbunden ist, wobei die Ablaufmittel eine Brennstofffrückflußleitung (44) aufweisen, die verbunden ist zwischen den Brennstoffzufuhrmitteln (36,38) und der unteren Sammelleitung (28), benachbart zur Brennstoffzufuhrleitung (40), und ein Rückschlagventil (46) in der Brennstoffrückflußleitung derart orientiert, daß der Brennstoff von der unteren Sammelleitung in die Brennstoffzufuhrmittel laufen kann, wenn der Druck in letzterer unter den Druck in der unteren Sammelleitung abfällt.

4. System nach einem der vorhergehenden Ansprüche, wobei die Brennstoffzufuhrmittel folgendes aufweisen:

erste im wesentlichen halbkreisförmige Brennstoffleitungsmittel (38), die die untere Sammelleitung (28) umgeben und an ihren entgegengesetzten Enden mit den Enden der oberen Sammelleitung (36) in Verbindung stehen, und eine zweite Brennstoffleitung (36) in Verbindung stehend mit der ersten Brennstoffleitung (38) im wesentlichen mittig zwischen den Enden der letzteren.

5. System nach einem der vorhergehenden Ansprüche, wobei die Brennstoffinjektoren (30) zur Luftblasbauart gehören.

6. Gasturbinenmaschine, ausgerüstet mit einem Brennstoffzufuhrsystem nach einem der vorhergehenden Ansprüche.

**Revendications**

1. Système d'alimentation en carburant pour moteur à turbine à gaz comprenant des collecteurs de carburant de forme arquée (26, 28) ayant, ensemble, une configuration essentiellement circulaire; une rangée circulaire d'injecteurs de carburant espacés essentiellement équiangulairement (30), espacés concentriquement à l'intérieur du cercle formé par les collecteurs, des conduits de carburant (32, 34) reliant les injecteurs de carburant qui sont ceinturés par chacun des collecteurs à ce collecteur; un moyen (36, 38) pour l'alimentation en carburant; un conduit d'alimentation en carburant (40) connecté entre le moyen l'alimentation en carburant (36, 38) et au moins l'un des collecteurs (28), sensiblement à mi-distance entre les extrémités de ce dernier; et un moyen (42) dans le conduit d'alimentation en carburant (40) pour créer une chute de pression qui est effective, pendant l'utilisation, pour faire en sorte que le carburant soit distribué à des débits sensiblement égaux dans les collecteurs, caractérisé en ce que la configuration essentiellement circulaire est produite par un collecteur supérieur et un collecteur inférieur (26, 28); en ce que le moyen d'alimentation en carburant (36, 38) est relié au collecteur supérieur (26), aux extrémités opposées de celui-ci; et en ce que le conduit d'alimentation en carburant (40) est connecté entre le moyen d'alimentation en carburant (36, 38) et le collecteur inférieur (28), sensiblement à mi-distance entre les extrémités de ce dernier.

2. Système selon la revendication 1, dans lequel le moyen pour créer la chute de pression est une valve de non-retour (42) orientée pour permettre au carburant de circuler du moyen d'alimentation en carburant (28, 38), à travers le conduit d'alimentation en carburant (40), vers le collecteur inférieur (28).

3. Système selon la revendication 1 ou 2, qui comprend un moyen pour drainer le carburant du collecteur inférieur lors de l'arrêt d'un moteur auquel le système d'alimentation en carburant est associé, pendant l'utilisation, le moyen de drainage comprenant un conduit de retour de carburant (44) connecté entre le moyen d'alimentation en carburant (36, 38) et le collecteur inférieur (28), près du conduit d'alimentation en carburant (40), et une valve de non-retour (46) dans le conduit de retour du carburant, orientée pour permettre au carburant de circuler du collecteur inférieur vers le moyen d'alimentation en carburant quand la pression dans ce dernier tombe au-dessous de celle dans le collecteur inférieur.

4. Système selon l'une quelconque des revendications précédentes, dans lequel le moyen d'alimentation en carburant comprend un premier conduit de carburant pratiquement semi-circulaire (38) entourant le collecteur inférieur (28) et relié à ses extrémités opposées aux extrémités du collecteur supérieur (26), et un second conduit de carburant (36) communiquant avec le premier conduit de carburant (38), sensiblèment à mi-distance entre les extrémités de ce dernier.

5. Système selon l'une quelconque des revendications précédentes, dans lequel les injecteurs de carburant (30) sont du type à injection d'air.

6. Moteur à turbine à gaz équipé d'un systéme d'alimentation en carburant selon l'une quelconque des revendications précédentes.

Fig 1.

Fig 2.